# EUROPEAN PATENT APPLICATION

(11) **EP 1 524 867 A2**
(43) Date of publication of application: **20.04.2005**
(21) Application number: 04104407.4
(22) Date of filing: 13.09.2004
(51) Int. Cl.: H04Q 3/545

(54) **Softswitch with object-oriented software which instantiates market specific classes at execution time**

(30) Priority: 17.10.2003 US 512580 P
(71) Applicant: Siemens Aktiengesellschaft, 80333 München (DE)
(72) Inventor: Oulid-Aissa, Mourad, Boca Raton, Florida 33433 (US); Wood, James Mc Kean, Fort Lauderdale, Florida 33305 (US)

(57) **Abstract**

The present invention relates to a universal softswitch and more particularly to a softswitch that instantiates a market specific class at execution time.

The behavior of switch software in various international markets has similarities and it has differences. It is an engineering challenge to design one base of software, referred herein as a universal softswitch, that handles differences in the markets without impact on real-time performance requirements. Presently, these decisions are typically made at product build time, which results in separate builds of the software for each market.

This invention proposes to reduce softswitch dependence on multiple variants and proposes a universal softswitch as a solution. An objectoriented approach is to make the market decision at execution time rather that at compile time. Using Class inheritance technology a hierarchy of classes is defined that specifies data and behavior specific to all classes in the hierarchy and that specify data and behavior specific to individual classes within the hierarchy. At execution time, a market-specific object from the class hierarchy based on one of the various markets is instantiated.

## Description

The present invention relates to a universal softswitch and more particularly to a softswitch that instantiates a market specific class at execute time.

The behavior of switch software in various international markets has similarities and it has differences. It is an engineering challenge to design one base of software, referred herein as a universal softswitch, that handles differences in the markets without impact on real-time performance requirements. Presently, these decisions are typically made at product build time, which results in separate builds of the software for each market. For a product targeting the international market, this increases the cost of maintenance and reduces testability.

The current state of practice accepts the existence of separate builds for each market as an engineering trade-off that yields software with better real-time performance. Factoring the market decision from the software as a product invariant eliminates a potentially large number of if/then condition statements from the software, thereby improving response time, critical for real-time telecommunications products.

Contrary to the current state of practice, the maintainability of switch software and the cost of its maintenance are important long term factors for market success. Improving maintainability and reducing cost depend in part on having a switch system that is easy to understand, easy to build, and easy to test.

This is difficult considering the afore-mentioned need for the switch to address international markets and multiple platforms. Such requirements frequently place constraints on product development that conflict with those of other variants. While developing an international softswitch that applies uniformly to all markets is an admirable objective, it is in reality a very difficult one to achieve in light of critical, competitive, and real-time performance requirements.

Nonetheless, a universal softswitch is desirable to attain. We must, however, consider and address a number of softswitch variants. This is because, addressing international market and platform requirements in the development environment results in distinct switches with distinct deliverables. The existence of these multiple variants has a great and adverse impact on the cost of building, maintaining, and testing the switch software. The maintainability of multiple variants must consider, for example, whether all variants are synchronized in terms of common functionality and whether any variant properly implements its own distinct functionality. Changes to the software, including new functionality and bug fixes, must be applied to all variants at the same time. It is further a problem to test all variants at the same time for changes to common software. It must also be considered whether there is one build for each component.

Until now, there is no universal softswitch solution.

This invention proposes to reduce softswitch dependence on multiple variants and, in fact, proposes a universal softswitch as a solution. More specifically, an object-oriented approach is utilized to provide new and more efficient ways for software to make the market decision at execution time rather than at compile time. Using Class inheritance technology a hierarchy of classes is defined that specifies data and behavior specific to all classes in the hierarchy and that specify data and behavior specific to individual classes within the hierarchy. Method polymorphism allows engineers to define hierarchies of virtual class methods that define specialized behavior for the same methods in different classes of the hierarchy.

The solution is addressed by dividing the problem into definable tasks and conquering each of these tasks in turn. The invention builds variant libraries and executables that are loaded dynamically into the product configuration, primarily for the ISUP Signaling Manager component. Further, the invention utilizes object-oriented capabilities to determine the market variant dynamically during execution, primarily for the Usage Collection component. As another task tools and support for markets and platforms may be developed in the engineering environment.

This invention has applications that use these object-oriented technologies to decide at initialization time which class in the hierarchy to instantiate. During subsequent program execution, applications use one interface that executes virtual methods without additional if/then condition statements. Selection of the virtual method from the class hierarchy incurs only the cost of a typical symbol table lookup.

Thus, inheritance and polymorphism are used to make market-based decisions at execution time without the performance penalty of if/then condition statements. In the softswitch domain, a softswitch for all of the international markets reduces the cost of its maintenance and improves its testability. However, certain requirements are unique to each market and other requirements are shared. In the present design, the market decision is made at compile time, resulting in separate builds for each market. Class inheritance and polymorphism make one product build in the international market a reality. Common data and behavior shared between markets are defined in base classes of a hierarchy. Specialized data and behavior are defined in derived classes of the hierarchy. Public interfaces are defined for the hierarchies, so that client applications can create a market-specific object of the class at initialization time and use one public interface, shared by all classes, to access the data and behavior of the specialized object, the determination of which is made by symbol table lookup at runtime.

For example, consider that a Usage Collection component produces Call Detail Records in the North American and European markets, and there are data and behavior common to the two markets and there are data and behavior specific to each market. Generally, it is the Call Control application that uses the interface provided by Usage Collection to manage Call Detail Records.

Usage Collection defines a base class with data and behavior common to, for example, North American and European markets, and defines derived classes for the North American and European markets with data and behavior specific to them. In this class hierarchy, Usage Collection also defines an interface for base and derived classes with virtual methods that provide Call Control with one public interface for both markets.

Throughout this description, various technical terms will be used. For clarity, these terms are provided here for ease of reference.
branch dependency: using a version of a source file from a ClearCase branch, different from the main development branch that, when compiled, is built into a product deliverable. compilation dependency: a use of one of the market constants within an #ifdef statement belonging to a source file that, when compiled, is built into a product deliverable.
finite state machine: a machine that represents transitions from states, realized as RTP contexts, to action routines, based on events, realized as call control messages.
inheritance: an object-oriented design strategy whereby one class inherits the members and methods of another class.
market variance: the degree to which the software delivered to a particular market has branch or compilation dependencies.
object-oriented design: a design that utilizes both inheritance and polymorphism in its data and functions.
polymorphism: an object-oriented design strategy whereby objects and their methods may have multiple definitions.
software architecture: the structure or structures of a system that comprise the software components, the externally visible properties of those components, and the relationships between them.

According to one aspect of the invention, a process shall be here briefly described.

At system startup time, Call Control instantiates the market-specific object from the class hierarchy based on whether the market is, for example, North America or Europe. Subsequently, Call Control uses one public interface of virtual methods provided by Usage Collection for creating and handling Call Detail Records. The decision to execute market-dependent functionality (in the derived class) or market-independent behavior (in the base class) is made by the software once at initialization time and by symbol table lookups thence forward.

The foregoing method satisfies two requirements. First, maintainability and testability are improved for switch software. Second, run-time performance is not adversely affected by such changes. The cost of maintenance is reduced because engineers have only one base of the software to design, implement, test, debug, and document. Previously, there was one base per market. Testability is improved because testing is divided into market-independent and market-dependent test cases. Were these decisions made at compile time, there would be multiple snapshots of the software, requiring repetition of market-independent test cases; with a single snapshot, they are executed just once. Run-time performance is not adversely affected because the technique requires an execution-time decision only at initialization time and not repeatedly during call processing. During subsequent execution, in which call processing takes place, the decision is handled internally by symbol table lookups with no impact on performance.

### OBJECTIVES

An object of the invention is to provide a universal softswitch.

An object of the invention is to provide the market decision at execution time rather than at compile time.

An object of the invention is to use one public interface, shared by all classes, to access the data and behavior of the specialized object, the determination of which is made by symbol table lookup.

An object of the invention is to provide building variant libraries and executables that are loaded dynamically into the product configuration, primarily for the ISUP Signaling Manager component.

An object of the invention is to provide utilizing object-oriented capabilities to determine the market variant dynamically during execution, primarily for the Usage Collection component.

An object of the invention is to provide tools and support for markets and platforms in the engineering environment.

An object of the invention is to provide no conditional compile flags in source files.

An object of the invention is to provide no conditional compile flags in header files that are used by other components.

An object of the invention is to isolate, reduce, and confine conditional compile flags to the minimal section of source code possible.

An object of the invention is to provide, where appropriate, certain components with a dynamic variant configuration.

An object of the invention is to provide variant configuration at run-time, preferably at initialization time.

An object of the invention is to provide platform-independent source files.

An object of the invention is to provide tooling and changes to the build environment that have no adverse impact on build- and production-time performance.

### BRIEF DESCRIPTION OF THE DRAWINGS

Fig. 1 sets forth the source code architecture for an ISUP Signal Manager ,
Fig. 2 illustrates an hierarchy of variant CDR classes;
Fig. 3 is a revised specification for class Use CDR;
Fig. 4 illustrates two examples of UscCDR calling sequences for the UCE;
Fig.5 illustrates the calling sequence within the Usc CDR;
Fig.6 illustrates the build and production process;
Fig. 7 sets forth the source code for handling of UCE messages with FSM;
Fig. 8 illustrates the class hierarchy for FSM actions in UCE;
Fig. 9 sets forth the source code for the implementation of virtual methods; and
Fig. 10 sets forth the source code for polymorphic definition and use of the class cUCEBaseAction.

### DETAILED DESCRIPTION OF THE PREFERRED EMBODIMENTS

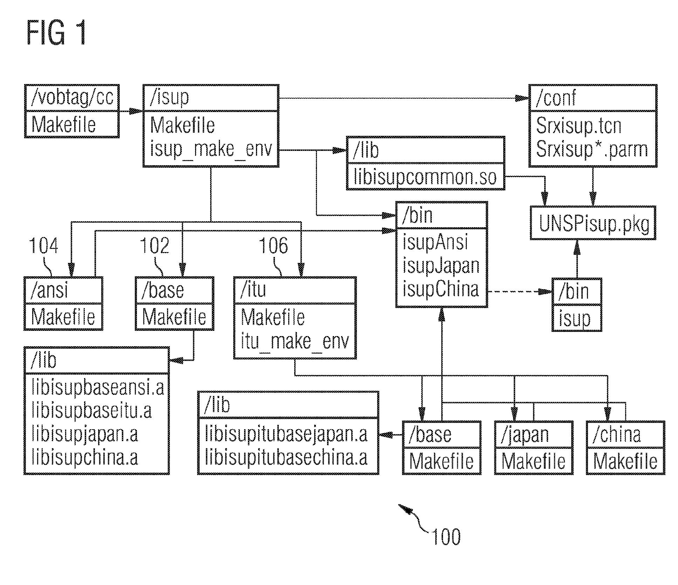

The invention defines tasks for solving the solution. The first of these defined tasks is building variant libraries and executables that are loaded dynamically into the product configuration. This invention chooses to implement these libraries and executables using the ISUP Signaling Manager 100 component which shall be discussed with reference to Figure 1. Of course, this is only an example and the present invention may be implemented using another application.

By way of background, the ISDN User Part (ISUP) defines the protocol and procedures used to set-up, manage, and release trunk circuits that carry voice and data calls over the public switched telephone network (PSTN). ISUP Signal Manager is used for both ISDN and non-ISDN calls. In brief, when a call is placed to an out-of-switch number, the originating SSP and STP transmits an ISUP Signal Manager initial address message (IAM) to reserve an idle trunk circuit from the originating switch to the destination switch. The IAM includes the originating point code, destination point code, circuit identification code, dialed digits and, optionally, the calling party number and name. The destination switch examines the dialed number, determines that it serves the called party, and that the line is available for ringing.

The destination switch rings the called party line and transmits an ISUP Signal Manager address complete message (ACM) to the originating switch (via its home SSP and STP) to indicate that the remote end of the trunk circuit has been reserved. The STP routes the ACM to the originating switch, which rings the calling party's line and connects it to the trunk to complete the voice circuit from the calling party to the called party. When the called party picks up the phone, the destination switch terminates the ringing tone and transmits an ISUP Signal Manager answer message (ANM) to the originating switch via its home STP. The STP routes the ANM to the originating switch, which verifies that the calling party's line is connected to the reserved trunk and, if so, initiates billing. If the calling party hangs-up first, the originating switch sends an ISUP Signal Manager release message (REL) to release the trunk circuit between the switches. The STP routes the REL to the destination switch. If the called party hangs up first, or if the line is busy, the destination switch sends an REL to the originating switch indicating the release cause (e.g., normal release or busy). Upon receiving the REL, the destination switch disconnects the trunk from the called party's line, sets the trunk state to idle, and transmits an ISUP Signal Manager release complete message (RLC) to the originating switch to acknowledge the release of the remote end of the trunk circuit. When the originating switch receives (or generates) the RLC, it terminates the billing cycle and sets the trunk state to idle in preparation for the next call.

The invention utilizes the ISUP Signaling Manager for prototyping a solution that produces variant-specific deliverables from common and variant-specific source code that is configured into the delivered product. The ISUP Signaling Manager utilizes the OMNI Ulticom stack and its interfaces for communicating SS7 messages to and from SS7 endpoints. The OMNI interfaces differ for each country variant, and there are three presently implemented: the ANSI market, which covers North America; and the two ITU markets, Japan and China. As a result, the source code base for the ISUP Signaling Manager differs in each of these three markets. Of course, North America, Japan & China are markets specifically selected for ISUP Signal Manager and another application may have different markets.

Referring back to Figure 1, the source code and deliverable architecture of the ISUP Signal Manager are shown. ISUP Signal Manager source code is organized into three high-level directories. The base directory 102 is functionality common to any ISUP Signal Manager protocol. The ANSI directory 104 is functionality that is specific to ANSI markets. The ITU directory includes code that is specific to ITU markets, with subdirectories for base functionality common to all ITU markets, functionality specific to the Japan market, and functionality specific to the China market.

By making use of the ISUP Signal Manager 100, the market-specific source code is factored and minimized into its own directory of source files and deliverable libraries and executables. This basis allows the invention to make judicious use of Makefiles to construct all market variants at build time. Further, the benefit of this arrangement in that the component deliverables, meaning the common shared library and market specific executables, are soft-linked to the generic ISUP Signal Manager name during initial configuration of the softswitch after it has been built. Again, the entire set of ISUP Signal Manager deliverables, for all market variants, are produced during the build process, and will be configured with the initial configuration of the product at a customer (or testing) site.

The benefits of this approach are that the component will deliver a single set of deliverables for all markets. Also, the maintenance and testing will be focused on one complete set of source files. Modifying existing variants, and introducing new ones, is simplified. The design, implementation, and testing of this approach are straightforward and the risks in doing these activities are minimal.

The Usage Collection component is utilized by the invention for prototyping a single-variant solution that is centered on C++ object-oriented inheritance and polymorphism. Usage Collection (USC) handles market variance through ClearCase branching. The predominant area where such divergence in compile-time dependencies is made is through the class UscCDR as defined in the modules UscCDR.h and implemented in UscCDR.cc. Other such dependencies, such as those in UscEnums.h, may be resolved easily by merging the variant files.

The invention modifies the design of USC to transfer control of market variance from compile-time dependencies to execution-time configuration. It does this while taking into account that any modifications to the API provided to the client of USC, the Universal Call Engine (UCE), are minimized and preferably avoided altogether. Further, because the functionality of UscCDR is activated during call processing, any impact on real-time performance must likewise be minimized or avoided.

Market variance is presently handled with three variants of the class UscCDR, one for each of the supported markets: Japan, China, and North America. Each of these class instances is defined (and labeled) on its own ClearCase branch. At compile time, the proper version is compiled into the USC deliverables.

The invention proposes a modification to the design of UscCDR that takes advantage of polymorphism and inheritance. To begin with, this application has a class hierarchy that is derived from UscCDRBase, the same base class of the former UscCDR. Also, the application hierarchically sorts the variants of UscCDR that factor out common data members and methods into parent classes. The application is also provided with an API in the new base class, UscCDRModel, of this hierarchy of public *set and get* methods that comprises the union of the *set and get* methods in classes of the hierarchy. Thus, an extensive revision to class UscCDR is provided. Nonetheless, the application here maintains the same API as provided to UCE, with the exception that the API now becomes the union of the *set and get* methods in the prior variants of UscCDR. This application further has a capability for the client application to specify the market dynamically at execution time to USC through its instance of class UscCDR. Alternatively, the application is provided with a capability for USC to retrieve the market dynamically from its own reference to class AucPlatform.

Referring back to our specific example, we can extract common data members and methods between the Japan, China, and North American variants of UscCDR. In this example, it was determined that the China variant stands virtually on its own with only one or two fields in common with the North America variant. The Japan and North America variants share 49 data members and the accompanying *set and get* methods for those data members. The Japan variant has another 49 data members and set/get methods for them that are unique to it and the North America variant has another 36 data members and set/get methods for them that are unique to it.

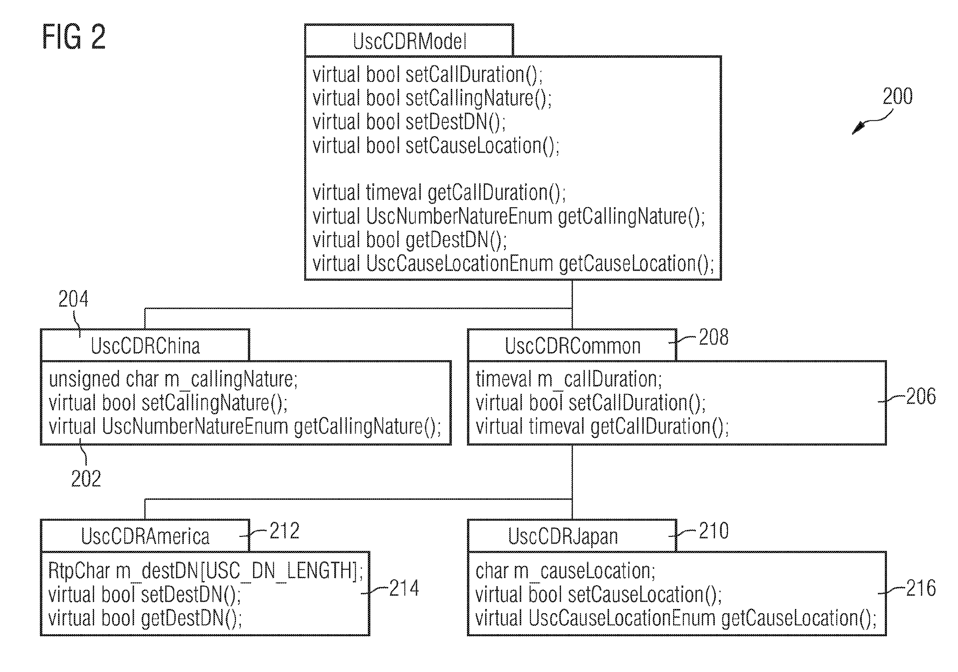

The resulting class hierarchy 200 follows easily and is shown in Figure 2, with some sample data members and *set*/*get* methods. Four representative data members from the variant CDR classes are shown. The callingNature CDR class 202 is a data member that is unique to the China market, and is represented in the class UscCDRChina 204. The callDuration CDR class 204 a data member that is shared in the Japan and North America markets, and is represented in the class UscCDRCommon 208 that is the base class for UscCDRJapan 210 and UscCDRAmerica 212. destDN 214 is a data member that is unique to the North America market, and represented in the class UscCDRAmerica 212. causeLocation 216 is a data member that is unique to the Japan market, and represented in the class UscCDRJapan 210. Each of the four derived classes defines exactly those data members as protected, with corresponding public *set and get* methods for them. In one aspect of the invention, the data members are defined as protected so that derived classes have access to them. For example, UscCDRJapan 210 should have access to callDuration 206, although it is defined in its parent UscCDRCommon 208.

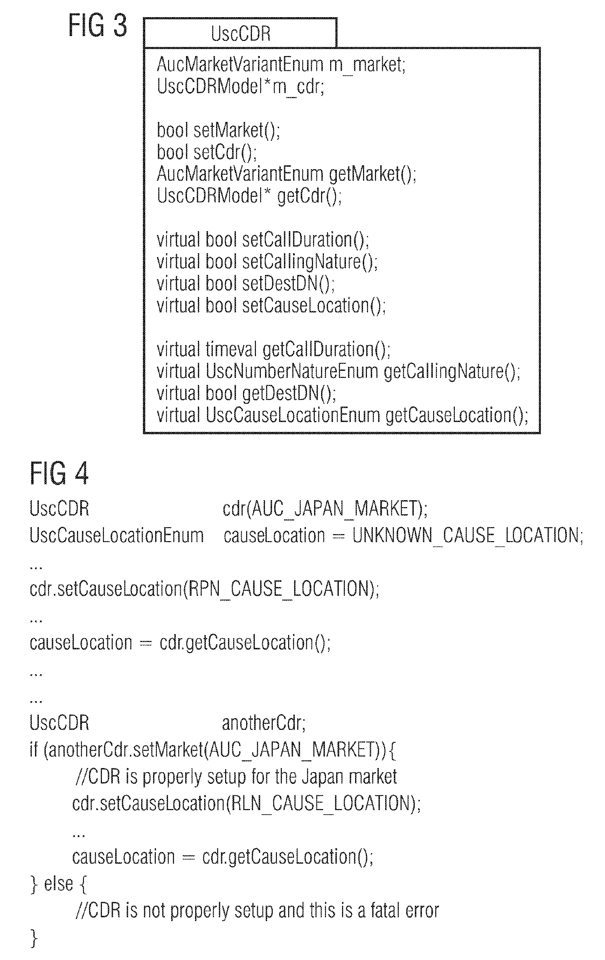

It shall be appreciated that the base class UscCDRModel defines a public API with the union of the *set and get* methods from these four derived classes. This public API is provided to the users of UscCDRModel. As a further implementation of the invention, the *set and get* methods are defined as virtual. This is so that the polymorphic nature of this class hierarchy is preserved and that binding to a specific *set*/*get* instance (representing a market variant) is done at run time. Further, the *set*/*get* implementations in UscCDRModel return default values, whereas the *set*/*get* implementations in the leaf classes (such as UscCDRJapan) return the actual values. If the UCE attempts calling setCallingNature, which is specific to China, in the Japan market, binding resorts to UscCDRModel and a default value (false) will be returned to the UCE. Conversely, if the UCE calls setCallingNature in the China market, binding resorts to UscCDRChina and the actual result is returned to the UCE. This class hierarchy, however, does not ensure that the client application, the UCE, is able to use the same API for class UscCDR as presently defined. Thus, the invention, as shown in Figure 3, revamps the class UscCDR to include a dynamic association to an instance of Usc-CDRModel that is bound at run time. The UCE sets the market dynamically at run time and the proper instance of UscCDRModel will be instantiated. Indeed, the capability exists to modify it repeatedly. Further, the UCE may access the same API of *set*/*get* methods provided by the former UscCDR. Their internal implementation within USC, however, is new. The API that is provided to UCE is, as with UscCDRModel, the union of *set*/*get* methods for the market variants of the former UscCDR. It shall be appreciated that the *set*/*get* methods for UscCDR have the same specification as those for UscCDRModel.

Then, the UCE instantiates an object UscCDR by specifying the market in the class constructor, which in turn creates the proper polymorphic instance of UscCDRModel for the data member cdr. Alternatively, the UCE may specify the market by calling the method setMarket. When the UCE calls a *set*/*get* method, the internal implementation of the new UscCDR dispatches this call to the method of the same name in Usc-CDRModel, which is then bound dynamically to the market-specific instance in the UscCDRModel hierarchy.

An example for the Japan market is given in Figure 4 with the calling sequence for the UCE to *set*/*get* data members of a CDR. In the first example, the market is set in the CDR's constructor. In this example, the market is not set until calling the setMarket method. If the application were to call the setCauseLocation method before calling the setMarket method, it would be undefined, do nothing, and simply return false. Calling setCauseLocation before calling setMarket results in a call to the base method UscCDRModel::setCauseLocation. Calling setCauseLocation after calling setMarket results in a call to the derived method UscCDRJapan::setCauseLocation.

Alternatively, due to the market variable being configurable through RTP, it should be entirely feasible for the USC to determine the market without the UCE passing it as a parameter to the constructor of UscCDR or calling the setMarket method. While the proposed design does specify this approach, the USC should ultimately be capable of setting the market variable on its own by accessing such an RTP configurable variable. In that event, the API for UCE does not change.

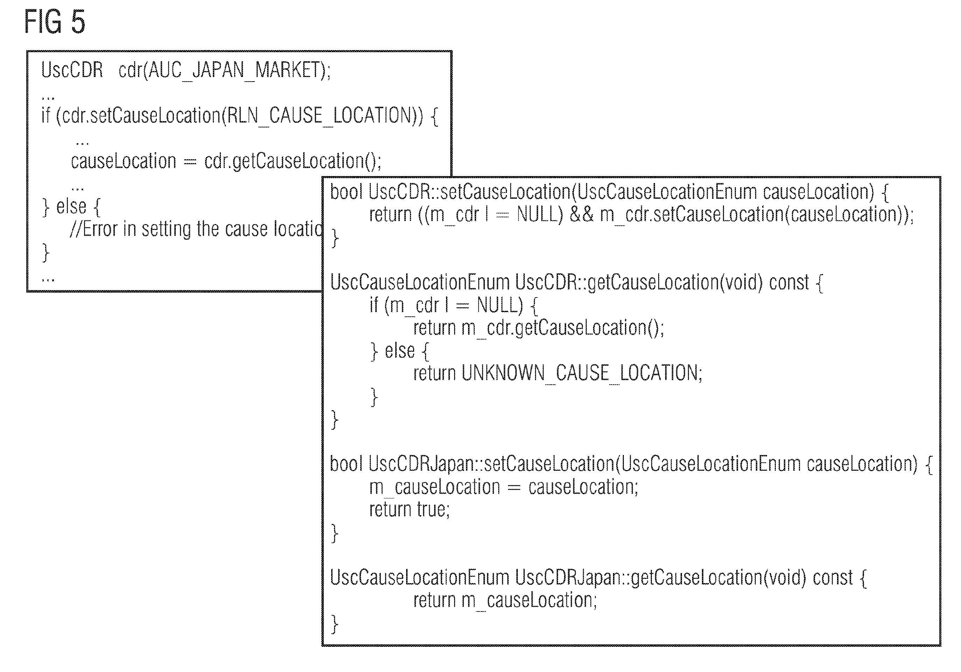

Because the UscCDR class contains an association to the polymorphic UscCDRModel class hierarchy that is implemented as a pointer, it may be necessary that each *set*/*get* method in UscCDR perform a check (m_cdr != NULL) prior to calling the corresponding *set*/*get* of the m_cdr, as in the calling sequence shown in Figure 5. However, it is typical in real-time applications such as this to require the invariant that m_cdr never be NULL, in which case the performance of the set/get methods may be restored to its prior level and the condition (m_cdr != NULL) may be removed from the UscCDR *set*/*get* methods. Such requirements already exist within the UCE and USC components.

Beyond the potential requirement of testing m_cdr for NULL, there are no performance penalties to pay for this implementation. From the standpoint of the run time environment, the use of virtual methods simply requires a lookup in the symbol table that has the same performance as lookups for concrete methods.

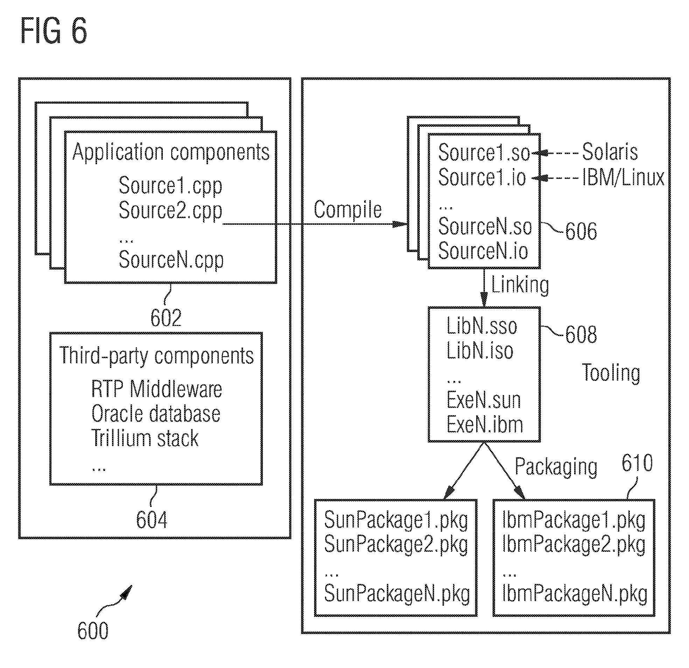

Figure 6 shows the operation 600 of the invention. The application components 602, along with third-party components 604 are compiled. The compiled applications 606 are then linked as executable programs 608 and are packaged as tools 610. At execution time, the invention instantiated at least one market-specific object from the class hierarchy based on the selected market.

Now turning to the task of determining data for Market Variance we look first to a solution provided by an hiQ 8000 softswitch (Siemens provided switch). The hiQ 8000 presently addresses the issue of market variance in a number of ways. Lacking central responsibility for the software architecture, engineers have chosen a variety of solutions for specializing their components to market-specific needs. These techniques include compilation dependencies with #ifdef statements in the source code, ClearCase branching to distinguish market-specific source files, distinct files and directories that MAKE files control, RTP configurable variables that control market-specific code at execution time, and class hierarchies and virtual methods that handle differences between markets.

Market variance thus far has focused on the use of compilation and branch dependencies. Some components have significant use of these dependencies. Predominantly, it is UCE that has significant #ifdef conditions that control, among other things, its handling of its finite state machine actions. ISUP, Services, XLA, and SIPT also make use of conditional compilation to differentiate market-specific source code. It is the USC component that makes most use of ClearCase branching to differentiate market-specific functionality and data. Additionally, the A3Server, AUTH, and DEAL components make use of ClearCase branching for market-specific code. Of course, there are other examples, but their uses of compilation and branch dependencies are comparatively minor. Migration to a configurable solution, as recommended by the invention, should not severely impact these components.

As a result of the shortcomings of the earlier solutions, the present invention recommends migration to a configurable, object-oriented solution that determines the market variant at execution time rather than compile time. Specifically, the Common component defines an RTP variable market that is accessed by all RTP-based components of the softswitch. The softswitch components manage execution of market-specific code inline using if/then or if/then/else control statements. Alternatively, the components define hierarchies of C++ classes, as needed, with a base class for all markets and derived classes for specific markets, along with virtual methods for market-specific source code.

Determining the market variance means for the present invention discovering how the software that is built into deliverables for supported markets differs from market to market. There are presently three market variants supported by hiQ 8000 software, Japan, North America, and China. The invention identifies two ways in which source files differ from market to market. Namely, they are compilation dependencies, in which #ifdef flags appear within individual files, and branch dependencies, in which versions appear in distinct ClearCase branches.

Discovering these dependencies in a concrete manner, the invention searches for them in the ClearCase directory structure under /vobtag. Compilation dependencies are identified by the invention by setting the ClearCase ConfigSpec to the latest official ANSI build, and searching all files under /vobtag for the market variable MARKET. Branch dependencies are identified for each market by the invention by setting the ClearCase ConfigSpec to the desired view, which for each market is the latest official build plus patches, listing the paths of all files under /vobtag, and searching for file instances not on the main branch.

Now turning to the solution of the invention to determine compilation dependencies we first look at the ClearCase View. To understand the current state of compilation dependencies in the source code, this description presents, as an example, the latest labeled source code in the development branch of the hiQ 8000 ClearCase hierarchy. This invention uses, for example SRX3000_DEV_02.01.ANSI.52 (followed by LATEST).

In this example, considering hiQ 8000 size, compilation dependencies in the hiQ 8000 source code are relatively few. These dependencies guarantee that different deliverables are created by the build process for different markets of the hiQ 8000. In the ideal situation, the hiQ 8000 would be one set of deliverables, which the customer would then configure to support a particular market.

To continue, these dependencies exist with the highest frequency in the UCE (Universal Call Engine) sources. There are valid reasons for these dependencies. The UCE sources are dependent on reading, analyzing, and writing call control messages that are specific to the protocols of the markets being supported. These messages differ in the supported markets in structure, size, and semantics.

Additional components where compilation dependencies produce different deliverables for different markets, in order of significance, are as follows. In the ISUP Signal Manager (ISDN User Part) component, the market variant is used in a compilation dependency that determines how the deliverables are built, market-dependent subsystems derived from different directories and files. The Services component has such dependencies in the North American market when generating CDRs and submitting them to the USC (Usage Collection) component. The XLA (Translation) component uses compilation dependencies to include (PIC3/4) fields for origination data in the Japan market. It also differentiates between validation conditions for DN codes in the Japan and other markets. It also includes or excludes charge rate, charge area, and carrier destination objects from particular markets (e.g. charge rate and charge area apply only to Japan). The XLA component also provides different processing functions for translated DNs and prefix access codes in different markets. In PRM (Prevention and Recovery Manager), a dependency on the Japan market is placed in the common routines to prevent PRI audits from being performed. Base component AUC (Authentication and Usage Collection), which is used by AUTH (Authentication), USC, CDM (ISDN Download Manager), and XDM (Translation Data Manager), has a compilation dependency on the market variant in order to set a class variable that can be used subsequently by its derived components. RTM (Routing and Trunking Manager) has an incidental dependency on the market variant for determining the minimum and maximum area code lengths. The SIP (Session Initiation Protocol) component has a single such dependency for converting ISUP Signal Manager return codes into SIP return codes. The MEGACO components differentiate between OMNI versions and ISUP Signal Manager header files based on the compilation market variant.

As an aside, it is desirable according to the invention that dependence on compiler flags is minimized (at best, eliminated) throughout the software, regardless of functional area. The area where the greatest reliance on conditional compilation resides is in the call processing center of the system, in particular the components UCE, ISUP, Services, XLA, and SIPT.

There are several techniques for handling market variance considered by the invention. In the first technique, a source file may use the #ifdef MARKET condition to control which source code is compiled into the build. In a second technique, a source file in the ClearCase hierachy may itself be branched into different implementations. When the product is built, the use of ClearCase labels on these different branches determines which versions are compiled into the build. A third technique causes distinct files and directories to be constructed in the /vobtag hierarchy. The parent MAKE file controls, based on the market being built, which files and directories are compiled into the build. In a fourth technique, a configurable variable may be defined in the Common component that defines the market and can be referenced by application components. This nonmodifiable variable may be set only once at initialization time. A fifth technique defines a class hierarchy with virtual methods that handle differences between market implementations. Among these techniques, it is the fourth technique, the use of a configurable variable, that allows the construction of market-independent components during system builds. The fifth technique 5 allows market-dependent source code to interact with market-independent source code at run time in an efficient manner.

Elsewhere, the MARKET flag appears in sources that can be modified with relatively minor impact. Assuming that the Common component provides a variable that can be accessed by all components through RTP configuration, the MARKET dependencies of PRM, for suppressing PRI audits in the Japan market can be eliminated. Further, the AUC base component (and thus also AUTH, USC, CDM, and XDM), is available for determining the market. The SIP, for converting return codes from ISUP Signal Manager to SIP, can be easily converted from #ifdef conditions into if/then statements dependent on the variable. In none of these cases would such a change impact system performance.

We turn now to the UCE, ISUP, Services, XLA, and SIPT components. Theoretically, the UCE and Services components should not require market-dependent source code, because they use a standard, protocol-independent message format. However, the actual message flows and contents of the messages are very specific to the markets they serve. Indeed, most of these dependencies lie in FSM (finite state machine) handling of messages. The UCE has state machines that process a daunting number of call control messages based on current call states. It is within the action routines of these state machines that the bulk of these dependencies lies.

Re-engineering the UCE to eliminate these dependencies requires the data structures and objects used during call processing may need to be merged into common structures. Also the conditional flags are eliminated and converted into the appropriate if/then and if/then/else clauses. Alternatively, a class hierarchy with virtual methods, may be used.

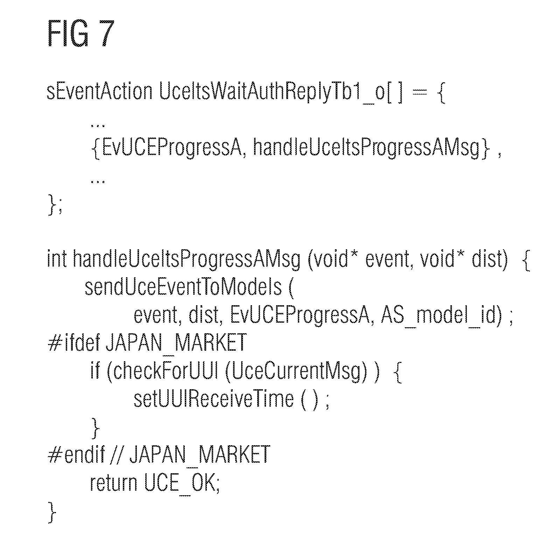

Now, a concrete example of the invention shall be provided with reference to the source code Figure 7. Here, the invention uses the UCE component to show how market variance may be achieved at execution time, rather than compile time, through the use of class inheritance and virtual methods.

The current design of the FSM module within UCE is predicated on the definition of arrays that map UCE states (a.k.a. call contexts) and events (a.k.a. messages) onto action routines and new states. In the example of Figure 7, the state is WaitAuthReply, the event is the ProgressA message, and the action is the routine handleUceItsProgressAMsg. Within this routine, there is a compilation dependency on source code that is executed only in the Japan market.

Redesigning this using a class hierarchy and virtual methods eliminates the necessity of compilation flags without introducing an additional control statement into the action routine. This is done by creating a base class that contains the market-independent routine. For each specialized market, a derived class that contains market dependent routines is created and, by default, directly accesses market-independent ones from the base class. The invention then instantiates the class as a global object at UCE initialization time, at which point the MARKET variable is used, but not as an #ifdef. The invention makes reference to the object within each action routine of the FSM. Alternatively, the FSM module is redefined to handle calling C++ class methods in addition to C functions.

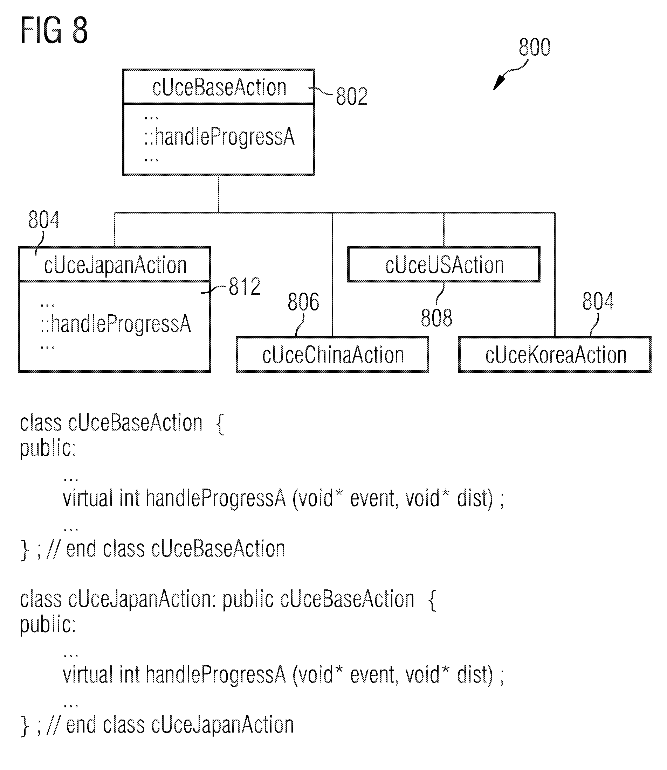

Figure 8 shows such a class hierarchy 800 as generated in accordance with the process illustrated by figure 7. All of the market-independent source code for these FSM action routines would be incorporated into the base class cUceBaseAction 802. Japan-specific source code is incorporated into derived class cUceJapanAction 804, and the same would be done for cUceChinaAction 806, cUceUSAction, cUceKoreaAction. In this model, each class may have its own implementation of handleProgressA 812, but not necessarily. In this example, only the Japan market has a specialization, so it is only defined in cUceJapanAction 812. The other markets inherit it directly from the base class. In the implementation, the market-independent source code is contained within methods of the base class cUceBaseAction 802. Japan-specific source code is placed within methods of the derived class cUceJapanAction 804.

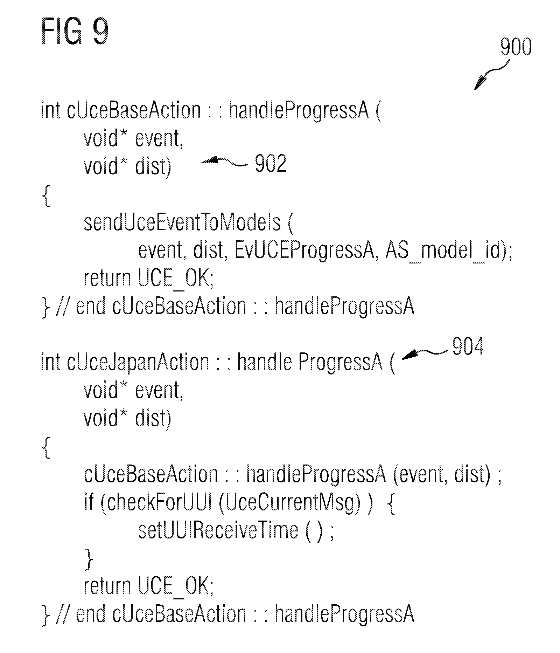

Figure 9 is the code 900 that demonstrates the implementation of virtual methods for the object handleProgressA (812, Figure 8). Here, the derived method calls the base method directly 902. This is only for illustrative purposes. It may also be arranged to have cUceJapanAction::handleProgressA call the function sendUceEventToModels directly 904 rather than go through cUceBaseAction. Once these class hierarchies and methods are defined, the invention links them to the FSM action routines and then to the main UCE component. This is done through the polymorphic use of the cUceBaseAction object.

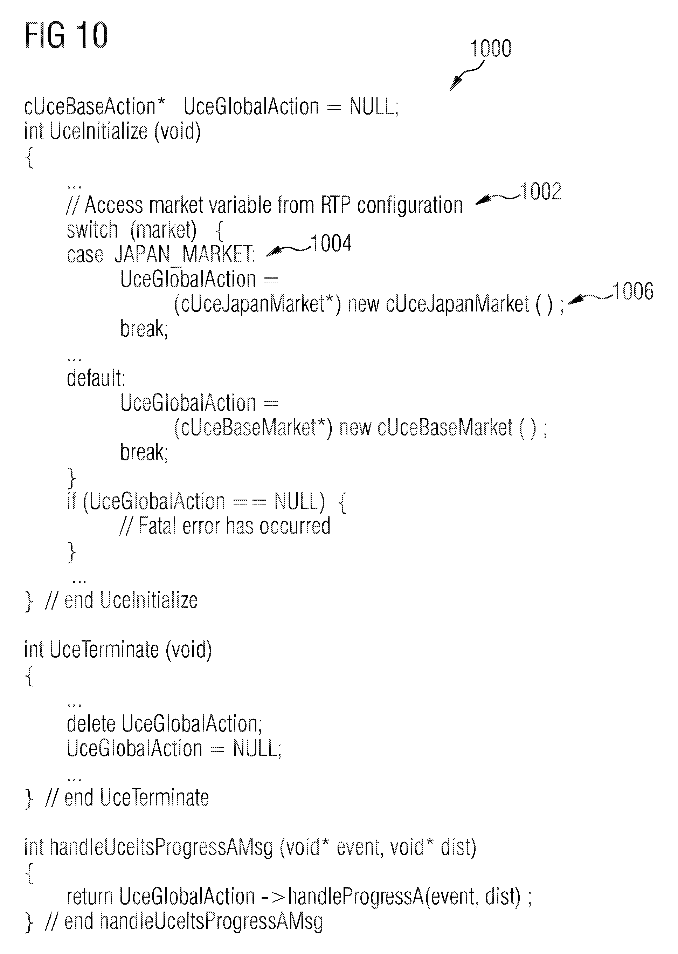

Figure 10 sets forth the code listing 1000 how the object is created at initialization time, and how it is used when the FSM action routine is called. At initialization time, it is necessary to make reference to the RTP configuration variable for the market in a switch statement, as referenced by 1002 to construct an object instance of cUceBaseAction that uses the appropriate derived class, and to include a default case in the switch statement. At the time the FSM action is called, it is necessary to make reference to the global object UceGlobalAction and call the handleProgressA method. Because the method is defined as virtual, the definition at execution time will be used. If the chosen market is Japan, see reference 1004, then cUceJapanAction is constructed at initialization 1006, and its version of handleProgressA is called on (WaitAuthReply, ProgressA); otherwise, cUceBaseAction is constructed and its version is called.

The foregoing example is intended for illustrative purposes only, that it is possible to implement market variance in a real-time dependent component such as UCE without introducing many if/then and if/then/else control statements into the source code. While there is an overhead cost attached to virtual methods, it is incidental when considering their benefits and the speed of today's compilers. Polymorphic definition of class hierarchies with virtual methods is a convenient and efficient mechanism for achieving such results.

## Claims

1. A method for providing a softswitch for various markets using an object-oriented approach to instantiate at least part of the softswitch based on market decisions at execution time rather than at compile time , the softswitch controlling switching of a telecommunications network, the method comprising the steps of:
defining a base class with data and behavior common to the various markets;
defining derived classes for the various markets with data and behavior specific to those markets; and
wherein the base class and derived classes form a class hierarchy;
instantiating, at execution time, a market-specific object from the class hierarchy based on one of the various markets.

2. The method according to claim 1, further comprising the step of building variant libraries and executables such as demonstrated in the ISUP Signal Manager.

3. The method according to claim 2, further comprising the step of loading variant libraries and executables dynamically into the softswitch.

4. The method according to claim 2, further comprising the step of organizing ISUP Signal Manager source code into high-level directories including a directory with functionality common to any ISUP Signal Manager protocol and a directory with functionality that is specific to another market.

5. The method according to claim 4, wherein a directory is an ANSI directory.

6. The method according to claim 4, wherein a directory is an ITU directory.

7. The method according to claim 1, further comprising the step of using of Makefiles to construct all market variants at build time.

8. The method according to claim 1, further comprising the step of executing market-dependent functionality in the derived class and market-independent behavior in the base class at initialization time and by symbol table lookups.

9. The method according to claim 1, further comprising the step of employing a Usage Collection (USC) component to handle market variance through branching.

10. The method according to claim 9, further comprising the step of modifying the USC to transfer control of market variance from compile-time dependencies to execution-time configuration.

11. The method according to claim 9, wherein the Usage Collection component produces Call Detail Records having data and behavior common to multiple markets, and data and behavior specific to each market.

12. The method according to claim 1, further comprising the step of defining a configurable variable in a common component that defines the market and can be referenced by application components, thereby facilitating construction of market-independent components during system builds.

13. The method according to claim 1, further comprising the step of defining a class hierarchy with virtual methods that handle differences between market implementations, thereby allowing market-dependent source code to interact with market-independent source code at run time in an efficient manner.

14. An apparatus for a telecommunications network, comprising:
a switch, at least a part of which is comprised of a softswitch that is instantiated at least based on market decisions at execution time rather than at compile time;
a base class with data and behavior common to the various markets;
derived classes for the various markets with data and behavior specific to those markets; and
wherein the base class and derived classes form a class hierarchy;
wherein, at execution time, a market-specific object is instantiated from the class hierarchy based on one of the various markets.

15. The apparatus according to claim 14, further comprising variant libraries and executables.

16. The apparatus of claim 14, further comprising high-level directories including a directory with functionality common to any ISUP Signal Manager protocol and a directory with functionality that is specific to another market.

17. The apparatus according to claim 16, wherein at least one directory is an ANSI directory.

18. The apparatus according to claim 16, wherein at least one directory is an ITU directory.

19. The apparatus according to claim 14, further comprising a Usage Collection (USC) component to handle market variance through branching.

20. The apparatus according to claim 19, wherein the Usage Collection component produces Call Detail Records having data and behavior common to two markets and there are data and behavior specific to each market.
